# EUROPÄISCHE PATENTSCHRIFT

(11) **EP 1 120 050 B1**
(45) Veröffentlichungstag und Bekanntmachung des Hinweises auf die Patenterteilung: **12.04.2006**
(21) Anmeldenummer: 01101405.7
(22) Anmeldetag: 23.01.2001
(51) Int. Cl.: A23L 3/16, A23L 3/14, A23B 9/02, A23B 7/005, A23L 3/015

(54) **Verfahren und Vorrichtung zur Reduzierung der Keimzahl von partikelförmigem Gut**
Process and apparatus for reducing the number of bacterial germs in particulate material
Procédé et appareil pour réduire le nombre de germes bactériens de produits en particules

(30) Priorität: 29.01.2000 DE 10003978
(43) Veröffentlichungstag der Anmeldung: 01.08.2001
(73) Patentinhaber: Dieckmann, Peter, 24568 Kaltenkirchen (DE)
(72) Erfinder: Dieckmann, Peter, 24568 Kaltenkirchen (DE)
(74) Vertreter: Thomas, Götz

(56) Entgegenhaltungen:
- EP-A- 0 803 203
- GB-A- 2 274 574
- US-A- 1 491 031
- US-A- 1 975 073
- US-A- 4 234 537
- US-A- 5 284 085
- US-A- 5 857 312
- PATENT ABSTRACTS OF JAPAN vol. 006, no. 063 (C-099), 22. April 1982 (1982-04-22) & JP 57 005678 A (TOYO SEIKAN KAISHA LTD), 12. Januar 1982 (1982-01-12)
- PATENT ABSTRACTS OF JAPAN vol. 2000, no. 15, 6. April 2001 (2001-04-06) & JP 2000 342447 A (AIHO CORP), 12. Dezember 2000 (2000-12-12)

## Beschreibung

Die Erfindung betrifft ein Verfahren und eine Vorrichtung zur Reduzierung der Keimzahl von partikelförmigem Gut, insbesondere von Gewürzen und Kräutern sowie anderen partikelförmigen Nahrungs- oder Lebensmitteln, wobei das zu behandelnde Gut chargenweise in einen beweglich aufgehängten und mit einem Schwingungserreger verbundenen Behälter eingebracht und der Behälter zusammen mit dem eingebrachten Gut in Schwingungen versetzt wird, während das Gut mit erhitztem Wasserdampf beaufschlagt wird, und bei dem das Gut anschließend wieder aus dem Behälter ausgebracht wird.

Es ist bereits seit langem bekannt, Nahrungsmittel mit Hilfe von erhitztem Wasserdampf keimfrei zu machen bzw. ihre Keimzahl zu verringern. Insbesondere Gewürze und Kräuter enthalten von Natur aus eine verhältnismäßig hohe Anzahl von Keimen, d.h. Bakterien, Schimmelpilze, Hefen oder andere Mikroorganismen, und müssen daher vor ihrem Verbrauch oder vor einer anderweitigen Verwendung, zum Beispiel zur Herstellung von Trockensuppen oder anderen Fertiggerichten, einer Sterilisationsbehandlung unterzogen werden, um die Keimzahl zu verringern. Eine entsprechende Behandlung ist auch bei medizinischen Tees oder Kräutermischungen erforderlich, bei denen eine besonders geringe Keimzahl vorgeschrieben ist.

Bei den oben genannten Gewürzen, Kräutern und Teemischungen ist eine sehr gleichmäßige Keimreduzierung erwünscht, zum einen, um im gesamten Produkt eine vorgeschriebene maximale Keimzahl einzuhalten und zum anderen, um durch die Dampfzufuhr den Gehalt dieser Produkte an ätherischen Ölen und anderen flüchtigen Inhaltsstoffen, die für Geschmack und/oder therapeutische Wirkung von großer Bedeutung sind, nicht mehr als notwendig zu verringern. Weiter ist insbesondere bei Kräutern und Teemischungen eine besonders schonende Behandlung des Gutes erwünscht, bei dem dieses nur geringen mechanischen Beanspruchungen unterworfen wird, so dass beispielsweise getrocknete Blätter nicht zerbrechen und/oder der Feinkornanteil nicht in unerwünschter Weise vergrößert wird.

Aus der EP 0 0803 203 A2 ist bereits eine Vorrichtung der eingangs genannten Art bekannt, bei der ein in den Behälter eingebauter Vibrationsförderer in Form einer Wendel einen mittleren zylindrischen Freifallbereich umgibt und von zwei am Einlass des Behälters angebrachten Vibrationsmotoren in Schwingungen versetzt wird, so dass ein in den Freifallbereich eingefülltes Gut auf der spiralförmigen Wendel von unten nach oben gefördert wird, von wo es durch den leergeförderten Freifallbereich wieder nach unten fällt. Die von den Vibrationsmotoren auf den Behälter aufgebrachten Schwingungen eine nach oben gerichtete Schwingungskomponente aufweisen, damit das Gut durch Mikrowürfe auf der Wendel nach oben transportiert wird. Der eingebaute Vibrationsförderer hat jedoch einige Nachteile: Da das gerade auf der Wendel befindliche Gut beim Öffnen des Auslasses nicht aus dem Behälter herausfällt, dauert die Entleerung des Behälters verhältnismäßig lange, da dieses Gut zuerst zum oberen Ende der Wendel gefördert werden muss. Wenn hingegen nur das gerade im Freifallbereich befindliche Gut ausgetragen wird, wird der Rest des Gutes länger als erforderlich erwärmt, wodurch der Gehalt an ätherischen Ölen bei Kräutern oder dergleichen zu stark absinkt. Weiter ist durch den eingebauten Vibrationsförderer der Befüllungsgrad des Behälters auf 25 bis 40 % des Behältervolumens begrenzt, da beim Befüllen nur der Freifallbereich mit Gut gefüllt wird, das anschließend über die Wendel nach oben gefördert wird und dann durch den inzwischen leer geförderten Freifallbereich wieder nach unten fällt.

Aus der US 5,857,312 ist es bei einem Verfahren und einer Vorrichtung zur Wärmebehandlung von Verpackungsbehältern mit einem Freiraum über dem verpackten Produkt, insbesondere von Dosen mit Nahrungsmitteln, bereits an sich bekannt, die in Kisten mit Rädern gepackten Dosen während der Behandlung in horizontale Schwingungen zu versetzen, indem die Kisten von einem Schwingungserreger auf Schienen innerhalb eines mit Dampf beaufschlagbaren Behälters hin und her bewegt werden.

Eine ähnliche Vorrichtung und ein ähnliches Verfahren zur Wärmebehandlung von Nahrungsmitteln in Beuteln sind aus der JP 57005678 (Patent Abstracts of Japan, Vol. 006, Nr. 063) bekannt. Die Beutel werden dort auf Schalen abgelegt, die von einer mit Rädern versehenen, von einem Motor hin und her bewegten Platte getragen werden, um die Beutel in Schwingung zu versetzen.

Die GB-A-2 274 574 offenbart eine Vorrichtung zur Reduzierung der Keimzahl von Kräutern oder ähnlichem Schüttgut, bei der ein mit dem Schüttgut befüllbarer und mit Dampf beaufschlagbarer Druckbehälter um eine horizontale Achse drehbar gelagert ist. Eine ähnliche Vorrichtung für denselben Zweck ist auch in der US-A-4,234,537 offenbart.

Ausgehend hiervon liegt der Erfindung die Aufgabe zugrunde, ein Verfahren und eine Vorrichtung der eingangs genannten Art dahingehend zu verbessern, dass der Durchsatz des zu behandelnden Gutes vergrößert werden kann.

Diese Aufgabe wird erfindungsgemäß durch die in den Patentansprüchen 1 und 9 angegebenen Merkmalskombinationen gelöst.

Der Erfindung liegt der Gedanke zugrunde, den Behälter mit dem eingefüllten Gut so in Schwingungen zu versetzen, dass das Gut im Behälterinneren hin und her bewegt wird, um es ohne einen Aufwärtsförderer und den dafür erforderlichen Platzbedarf im Behälterinneren aufzulockern, bei der Befüllung die Gutoberfläche schnell einzuebnen und bei der Entleerung das Gut ohne Behinderung durch einen Aufwärtsförderer schnell durch den Auslass auszutragen. Der durch die erfindungsgemäßen Maßnahmen bewirkte größere Befüllungsgrad von mehr als 70 bis 80 % ermöglicht zusammen mit der erreichbaren Verkürzug der Befüllungs- und Entleerungszeiten eine erhebliche Steigerung des Durchsatzes des zu sterilisierenden Gutes bei ansonsten gleichen Sterilisationsbedingungen.

Die durch die Schwingungen des Behälters und des Gutes bewirkte Auflockerung des letzteren reicht aus, um ein schnelles Eindringen des heißen Wasserdampfs zwischen die Partikel und einen gleichmäßigen Kontakt sämtlicher Partikel mit dem wasserdampf sicherzustellen, ohne dass ein Aufwärtsförderer oder andere, eine schnelle Befüllung bzw. Entleerung behindernde Einbauten im Behälter erforderlich sind. Gleichzeitig verhindert die Bewegung ein Zusammenbacken von Partikeln infolge der zugeführten Feuchtigkeit.

Die Schwingungsbewegung des gesamten Behälters ermöglicht einen hermetischen Einschluss des Gutes im Behälter, so dass gemäß einer bevorzugten Ausgestaltung der Erfindung die zwischen den einzelnen Gutpartikeln vorhandene Luft vor der Beaufschlagung mit dem Wasserdampf durch Anlegen eines Unterdrucks am Behälterinneren abgesaugt werden kann, um die Erhitzung des Gutes durch die Dampfzufuhr zu beschleunigen und die Verweilzeit des Gutes im Behälter zu verkürzen. Die Schwingungsbewegung ermöglicht es darüber hinaus auch, den Behälter durch einen am unteren Behälterende angeordneten Auslass zu entleeren, ohne dass ein Teil des Gutes auf dem Boden des Behälters liegen bleibt. Dabei dient der Behälter selbst als Förderorgan, so dass ein Einbau von anderen Fördermitteln entbehrlich ist und das Verhältnis von Behälterinhalt zu Behältergröße verbessert werden kann.

Eine weitere bevorzugte Ausgestaltung der Erfindung sieht vor, dass der Behälter in horizontale, vorzugsweise langhubige Schwingungen mit einer Schwingungsamplitude von wenigstens 10 und vorzugsweise mehr als 20 mm versetzt wird, wobei diese Schwingungen vorzugsweise linear sind aber auch kreisförmig oder elliptisch sein können. Durch die Horizontalbewegung des Behälters wird das Gut gegen die Behälterwände und von diesen zurück geworfen, was neben einer Auflockerung auch eine gute Durchmischung des Gutes zur Folge hat. Wenn der Behälter in horizontale lineare Schwingungen versetzt wird, sind vorzugsweise zwei entgegengesetzte Behälterwände senkrecht zur Schwingungsrichtung ausgerichtet, um diese Wirkung zu steigern.

Der Behälter bildet einen Freischwinger, der an Blattfedern aufgehängt ist und über einen Exzenterantrieb in Schwingungen versetzt wird.

Um die Gutpartikel trotz ihrer Trägheit und ihrer Packung im Behälter hin und her zu bewegen und gleichzeitig eine Zerstörung oder Beschädigung der Gutpartikel zu vermeiden, ist die Frequenz der Schwingungen besonders bei grobstückigem und empfindlichem Gut zweckmäßig niedrig, und liegt vorzugsweise unter 10 Hz, besser unter 5 Hz und vorzugsweise zwischen 3 und 5 Hz, während sie bei feinkörnigem Gut höher sein kann.

Die chargenweise Behandlung des Gutes im Behälter ermöglicht die Einstellung einer genau definierten Verweilzeit, die für sämtliche Partikel des Gutes gleich lang ist.

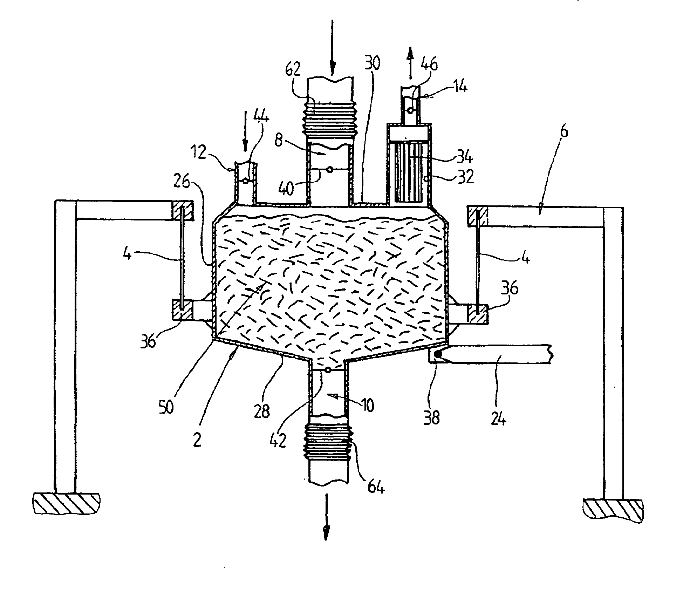

Im folgenden wird die Erfindung anhand eines in der Zeichnung dargestellten Ausführungsbeispiels näher erläutert, wobei die einzige Zeichnungsfigur eine schematische, teilweise geschnittene Seitenansicht einer erfindungsgemäßen Vorrichtung zur Keimreduzierung zeigt.

Die in der Zeichnung dargestellte Vorrichtung besteht im wesentlichen aus einem Druckbehälter 2, der durch Blattfedern 4 an einem starren Rahmen 6 in horizontaler Richtung hin und her beweglich aufgehängt ist und einen an seinem oberen Ende angeordneten verschließbaren Guteinlass 8 sowie einen an seinem unteren Ende angeordneten verschließbaren Gutauslass 10 aufweist und der durch eine verschließbare Dampfzufuhrleitung 12 mit einer Heißdampfquelle (nicht dargestellt) und durch eine verschließbare Luftabsaugleitung 14 mit einer Vakuumpumpe (nicht dargestellt) verbindbar ist, sowie aus einem Schwingungserreger (nicht dargestellt) in Form eines Linearschwingers mit bekannter Bauweise, der durch eine Schubstange 24 auf den Druckbehälter 2 einwirkt, um diesen in horizontale Schwingungen zu versetzen.

Das Innere des Druckbehälters 2 weist in Draufsicht einen rechteckigen oder quadratischen Querschnitt auf und wird von vier im rechten Winkel zueinander angeordneten senkrechten Begrenzungswänden 26, einem zu einer vertikalen Mittelachse des Behälters 2 hin schräg nach unten geneigten Boden 28 und einem ebenen horizontalen Deckel 30 begrenzt. Das Behälterinnere weist ein Volumen von etwa 0,2 m³ und maximale von 05 m³ auf. Der Gutauslass 10 und der Guteinlass 8 sind entlang der Mittelachse übereinander im Boden 28 bzw. im Deckel 30 angeordnet. Die Luftabsaugleitung 14 und die Dampfzufuhrleitung 12 münden zu beiden Seiten des Guteinlasses 8 ins Behälterinnere. An der Einmündung der Luftabsaugleitung 14 weist der Deckel 30 eine nach unten offene vertikale zylindrische Ausnehmung 32 auf, in der eine Filterpatrone 34 in senkrechter Ausrichtung untergebracht ist. Die Filterpatrone 34 verhindert den Transport von kleinen Gutpartikeln zur Vakuumpumpe, wenn mit dieser ein Unterdruck am Behälter 2 angelegt wird. Die an der Außenseite der Filterpatrone 34 abgeschiedenen Partikel können später, vorzugsweise beim Entleeren des Behälters 2, mit einem Druckluftstoß abgereingt werden, wobei sie durch die untere Öffnung der Ausnehmung 32 zurück in den Behälter 2 fallen und zusammen mit dem übrigen Gut durch den Auslass 10 ausgetragen werden können.

Zwei entgegengesetzte Begrenzungswände 26 des Behälters 4 weisen nach außen überstehende Vorsprünge 36 auf, an denen die im wesentlichen vertikal ausgerichteten Blattfedern 4 mit ihren unteren Enden starr befestigt sind. Die oberen Enden der Blattfedern 4 sind starr mit dem Rahmen 6 verbunden.

Der Behälterboden 28 weist in der Nähe von einer der beiden Begrenzungswände 26 einen nach unten überstehenden Vorsprung 38 auf, mit dem das eine Ende der Schubstange 24 gelenkig verbunden ist. Das andere Ende der im Wesentlichen horizontal ausgerichteten Schubstange 24 wird vom Schwingungserreger in Bewegung versetzt.

Der Guteinlass 8, der Gutauslass 10, die Dampfzufuhrleitung 12 und die Luftabsaugleitung 14 sind mit Verschlussklappen 40, 42 bzw. Ventilen 44, 46 versehen, die gewöhnlich gasdicht verschlossen sind und geöffnet werden können, um den Behälter 2 mit einer Charge eines zu behandelnden partikelförmigen Gutes 50 zu befüllen, den Behälter 2 nach der Behandlung des Gutes 50 wieder zu entleeren, während der Behandlung Heißdampf aus der Heißdampfquelle ins Innere des Behälters 2 zuzuführen bzw. vor der Dampfzufuhr die zwischen den Gutpartikeln enthaltene Luft mit der Vakuumpumpe durch die Filterpatrone 34 hindurch aus dem Behälterinneren abzusaugen, so dass im Behälter 2 keine oder nur wenig Luft enthalten ist, die vom zugeführten Heißdampf erwärmt und verdrängt werden muss. Um eine Kondensation von Dampf auf den Behälterwänden 26, 28, 30 zu verhindern, können diese mit einer Heizeinrichtung (nicht dargestellt) versehen sein, um sie vor der Dampfzufuhr zu beheizen.

Bei eingeschaltetem Schwingungserreger wird der Behälter 2 durch die Schubstange 24 in eine im wesentlichen horizontale Schwingungsbewegung versetzt, deren Amplitude zwischen 20 und 50 mm liegt und deren Frequenz 3 bis 5 Hz beträgt.

Um eine Übertragung der Schwingungsbewegung des Behälters 2 auf einen über dem Guteinlass 8 angeordneten Einfülltrichter (nicht dargestellt), einen unter dem Gutauslass 10 angeordneten Trockner (nicht dargestellt) zum Trocknen des Gutes 50 im Anschluss an die Dampfentkeimung, sowie auf die Heißdampfquelle und die Vakuumpumpe zu verhindern, sind der Guteinlass 8 und der Gutauslass 10 jeweils durch ein oberhalb bzw. unterhalb der zugehörigen Verschlussklappe 40 bzw. 42 angeordnetes flexibles Schlauchstück 62, 64 mit dem Einfülltrichter bzw. mit dem Trockner (nicht dargestellt) verbunden. Aus demselben Grund weisen die Dampfzufuhrleitung 12 und die Luftabsaugleitung 14 ebenfalls flexible Leitungsabschnitte (nicht dargestellt) auf.

Zur Reduzierung der Keimzahl eines zu behandelnden Gutes, beispielsweise von gerebeltem Majoran, geschrotetem Pfeffer oder ganzen Pfefferkörnern, einer Teemischung aus getrockneten Kräutern oder dergleichen wird zuerst der leere Druckbehälter 2 durch Einschalten des Schwingungserregers in Schwingungen versetzt und eine Charge des Gutes mit vorbestimmtem Gewicht oder Volumen in bekannter Weise in den Einfülltrichter dosiert.

Anschließend wird die Verschlussklappe 40 im Guteinlass 8 geöffnet, um den Druckbehälter 2 mit der dosierten Gutmenge zu befüllen. Dabei wird die Schwingungsbewegung des Behälters 2 durch dessen Wände 26, 28 auf das ins Innere eingebrachte Gut 50 übertragen, so dass dessen Oberfläche schnell eingeebnet wird. Dadurch kann der Behälter 2 bis in die Nähe der Decke 30 befüllt werden, um sein Füllvolumen möglichst gut auszunutzen.

Nach dem Einfüllen des Gutes 50 wird die Verschlussklappe 40 wieder geschlossen und bei laufendem Schwingungserreger das Ventil 44 in der Luftabsaugleitung 12 geöffnet, um die im Behälterinneren zwischen den Partikeln des Gutes 50 sowie zwischen dem Gut 50 und der Behälterdecke 30 verbliebene Luft abzusaugen, so dass dort ein Vakuum von 80 % oder mehr erzeugt wird. Die Schwingungen des Behälters 2 bewirken dabei eine Auflockerung des Produkts 50, die einem Zusammenbacken oder verdichteten Absetzen entgegenwirkt.

Nach dem Erreichen des gewünschten Unterdrucks wird das Ventil 44 in der Luftabsaugleitung 12 wieder geschlossen und anschließend das Ventil 46 in der Dampfzufuhrleitung 14 geöffnet, um gesättigten Heißdampf ins Behälterinnere zu leiten und dadurch das Gut 50 in kürzester Zeit auf eine vorgegebene Temperatur zu erwärmen. Diese Temperatur wird durch dosierte Dampfzufuhr über eine bestimmte Zeitspanne gehalten, die zuvor für das jeweilige Gut ermittelt worden ist und ausreicht, um die auf den Oberflächen und im Inneren der Gutpartikel angesiedelten Mikroorganismen weitgehend abzutöten. Der Schwingungserreger bleibt auch während der Sterilisation eingeschaltet, um den Behälter 2 in Schwingungen zu versetzen. Durch die Schwingungen wird das Produkt in schonender Weise und ohne mechanische Beanspruchung aufgelockert und gegeneinander anliegende Partikeloberflächen voneinander getrennt, so dass sie ständig der Einwirkung des Heißdampfs ausgesetzt sind.

Nach Ablauf einer für die gewünschte Keimreduzierung erforderlichen voreingestellten Zeitspanne bleibt das Ventil 44 geschlossen und die Verschlussklappe 42 im Gutauslass 10 wird geöffnet, um den Dampfdruck zu entspannen und den Behälter 2 zu entleeren. Auch dabei wird der Behälter 2 in Schwingungen versetzt, da diese den Transport des Gutes 50 zum Auslass 10 bewirken und eine Bildung von Gutbrücken im Behälterinneren verhindern.

Im nachgeschalteten Trockner wird das Gut anschließend wieder bis auf seine Ausgangsfeuchtigkeit getrocknet, während der Behälter 2 mit einer neuen Charge befüllt und der oben beschriebene Keimreduzierungszyklus wiederholt wird. Dabei bleibt der Schwingungserreger zweckmäßig während des gesamten Zyklus eingeschaltet und läuft bei unmittelbar aufeinanderfolgenden Zyklen vorzugsweise im Dauerbetrieb.

## Patentansprüche

1. Verfahren zur Reduzierung der Keimzahl von losem partikelförmigem Schüttgut, insbesondere von Gewürzen und Kräutern sowie anderen partikelförmigen Nahrungs- oder Lebensmitteln, bei dem das Schüttgut chargenweise in einen beweglich aufgehängten und mit einem Schwingungserreger verbundenen Druckbehälter eingebracht und der Druckbehälter zusammen mit dem eingebrachten Schüttgut in Schwingungen versetzt wird, während das Schüttgut mit erhitztem Wasserdampf beaufschlagt wird, und bei dem das Schüttgut anschließend wieder aus dem Druckbehälter ausgebracht wird, **dadurch gekennzeichnet, dass** das gesamte Innenvolumen des Druckbehälters (2) vor der Beaufschlagung mit dem Wasserdampf bis in die Nähe seines oberen Endes mit dem zu behandelnden losen Schüttgut gefüllt wird, und dass der an Blattfedern (4) aufgehängte Druckbehälter (2) zusammen mit dem losen Schüttgut (50) in horizontale Schwingungen versetzt wird.

2. Verfahren nach Anspruch 1, **dadurch gekennzeichnet, dass** die Amplitude der Schwingungen mehr als 10 und vorzugsweise mehr als 20 mm beträgt.

3. Verfahren nach Anspruch 1 oder 2, **dadurch gekennzeichnet, dass** der Behälter (2) während der Befüllung in Schwingungen versetzt wird.

4. Verfahren nach einem der Ansprüche 1 bis 3, **dadurch gekennzeichnet, dass** der Behälter (2) nach dem Befüllen mit einer Charge des Schüttgutes (50) hermetisch verschlossen wird.

5. Verfahren nach einem der Ansprüche 1 bis 4, **dadurch gekennzeichnet, dass** vor der Beaufschlagung mit dem Wasserdampf ein Unterdruck am Behälter (2) angelegt wird, und dass der Behälter (2) während des Anlegens des Unterdrucks in Schwingungen versetzt wird.

6. Verfahren nach einem der Ansprüche 1 bis 5, **dadurch gekennzeichnet, dass** der Behälter (2) nach der Beaufschlagung mit dem Wasserdampf entleert und während der Entleerung in Schwingungen versetzt wird.

7. Verfahren nach einem der Ansprüche 1 bis 6, **dadurch gekennzeichnet, dass** der Behälter (2) während der gesamten Dauer eines Keimreduzierungszyklus in Schwingungen versetzt wird.

8. Verfahren nach einem der Ansprüche 1 bis 7, **dadurch gekennzeichnet, dass** die Verweilzeit des Schüttgutes im Behälter (2) in Abhängigkeit von der Temperatur im Behälterinneren oder in Abhängigkeit von der Temperatur des Schüttgutes gesteuert wird.

9. Vorrichtung zur Reduzierung der Keimzahl von losem partikelförmigem Schüttgut, insbesondere von Gewürzen und Kräutern sowie anderen partikelförmigen Nahrungs- oder Lebensmitteln, umfassend einen beweglich aufgehängten Druckbehälter mit einem Ein- und Auslass für das Schüttgut, eine mit dem Inneren des Druckbehälters verbindbare Quelle für erhitzten wasserdampf und einen mit dem Druckbehälter verbundenen Schwingungserreger zum Bewegen des Schüttgutes während der Beaufschlagung mit dem Wasserdampf, **dadurch gekennzeichnet, dass** das gesamte Innenvolumen des Druckbehälters (2) bis in die Nähe seines oberen Endes mit dem losen Schüttgut befüllbar ist, und dass der Druckbehälter (2) an vertikalen Blattfedern (4) aufgehängt und durch den Schwingungserreger in horizontale Schwingungen versetzbar ist.

10. Vorrichtung nach Anspruch 9, **dadurch gekennzeichnet, dass** der Behälter (2) hin und her beweglich aufgehängt ist.

11. Vorrichtung nach Anspruch 9 oder 10, **dadurch gekennzeichnet, dass** der Behälter (2) in einer im wesentlichen horizontalen Ebene beweglich aufgehängt ist.

12. Vorrichtung nach einem der Ansprüche 9 bis 11, **dadurch gekennzeichnet, dass** die Schwingungen des Behälters (2) eine Schwingungsamplitude von mehr als 10 mm und vorzugsweise von mehr als 20 mm aufweisen.

13. Vorrichtung nach einem der Ansprüche 9 bis 12, **dadurch gekennzeichnet, dass** der Schwingungserreger einen Exzenterantrieb und ein zwischen dem Exzenterantrieb und dem Behälter (2) angeordnetes Übertragungsorgan (24) umfasst, das die Bewegung des Exzenterantriebs auf den Behälter (2) überträgt.

14. Vorrichtung nach einem der Ansprüche 9 bis 13, **gekennzeichnet durch** eine mit dem Behälterinneren verbindbare Unterdruckquelle und Einrichtungen (46) zum Verbinden der Unterdruckquelle mit dem Behälterinneren.

15. Vorrichtung nach Anspruch 14, **gekennzeichnet durch** einen zwischen der Unterdruckquelle und dem Behälterinneren angeordneten Partikelfilter (34).

16. Vorrichtung nach Anspruch 15, **dadurch gekennzeichnet, dass** der Partikelfilter in einer nach unten offenen Erweiterung (32) des Behälters (2) angeordnet ist.

17. Vorrichtung nach einem der Ansprüche 9 bis 16, **dadurch gekennzeichnet, dass** zwischen dem Einlass (8) und einer darüber angeordneten Befüllungseinrichtung und/oder zwischen dem Auslass (10) und einer darunter angeordneten Trocknungseinrichtung flexible Verbindungsstücke (62, 64) angeordnet sind.

18. Vorrichtung nach einem der Ansprüche 9 bis 17, **dadurch gekennzeichnet, dass** der Behälter (2) einen zum Auslass (10) hin nach unten geneigten Boden (28) aufweist, dessen Neigung weniger als 30 Grad beträgt.

## Claims

1. Process for reducing the microbial count of loose particulate bulk material, especially of spices and herbs and other particulate foods or foodstuffs, in which the bulk material is introduced in batches into a movably suspended pressure vessel connected to a vibration exciter, and the pressure vessel, together with the introduced bulk material, is set in vibrations, whilst the bulk material is subjected to heated water vapour, and in which the bulk material is then unloaded from the pressure vessel, **characterized in that** the entire internal volume of the pressure vessel (2), prior to the water vapour treatment, is filled to close to its upper end with the loose bulk material to be treated, and **in that** the pressure vessel (2) suspended from leaf springs (4), together with the loose bulk material (50), is set in horizontal vibrations.

2. Process according to Claim 1, **characterized in that** the amplitude of the vibrations measures more than 10 mm and preferably more than 20 mm.

3. Process according to Claim 1 or 2, **characterized in that** the vessel (2), as it is filled, is set in vibrations.

4. Process according to one of Claims 1 to 3, **characterized in that** the vessel (2), after having been filled with a batch of the bulk material (50), is hermetically sealed.

5. Process according to one of Claims 1 to 4, **characterized in that**, prior to the water vapour treatment, a vacuum is applied to the vessel (2), and **in that** the vessel (2), during application of the vacuum, is set in vibrations.

6. Process according to one of Claims 1 to 5, **characterized in that** the vessel (2) is emptied following the water vapour treatment and, as it is emptied, is set in vibrations.

7. Process according to one of Claims 1 to 6, **characterized in that** the vessel (2), throughout the duration of a microbe reduction cycle, is set in vibrations.

8. Process according to one of Claims 1 to 7, **characterized in that** the retention time of the bulk material in the vessel (2) is controlled in dependence on the temperature inside the vessel or in dependence on the temperature of the bulk material.

9. Apparatus for reducing the microbial count of loose particulate bulk material, especially of spices and herbs and other particulate foods or foodstuffs, comprising a movably suspended pressure vessel having an inlet and outlet for the bulk material, a source, connectable to the inside of the pressure vessel, for heated water vapour, and a vibration exciter, connected to the pressure vessel, for moving the bulk material during the water vapour treatment, **characterized in that** the entire internal volume of the pressure vessel (2) can be filled to close to its upper end with the loose bulk material, and **in that** the pressure vessel (2) is suspended from vertical leaf springs (4) and can be set in horizontal vibrations by the vibration exciter.

10. Apparatus according to Claim 9, **characterized in that** the vessel (2) is suspended such that it can be moved back and forth.

11. Apparatus according to Claim 9 or 10, **characterized in that** the vessel (2) is suspended such that it can be moved in a substantially horizontal plane.

12. Apparatus according to one of Claims 9 to 11, **characterized in that** the vibrations of the vessel (2) have a vibration amplitude of more than 10 mm and preferably of more than 20 mm.

13. Apparatus according to one of Claims 9 to 12, **characterized in that** the vibration exciter comprises an eccentric drive and a transmission member (24) which is disposed between the eccentric drive and the vessel (2) and transmits the motion of the eccentric drive to the vessel (2).

14. Apparatus according to one of Claims 9 to 13, **characterized by** a vacuum source connectable to the inside of the vessel, and devices (46) for connecting the vacuum source to the inside of the vessel.

15. Apparatus according to Claim 14, **characterized by** a particle filter (34) disposed between the vacuum source and the inside of the vessel.

16. Apparatus according to Claim 15, **characterized in that** the particle filter is disposed in a downwardly open widening (32) of the vessel (2).

17. Apparatus according to one of Claims 9 to 16, **characterized in that** flexible connecting pieces (62, 64) are disposed between the inlet (8) and an above-situated filling device and/or between the outlet (10) and a below-situated drying device.

18. Apparatus according to one of Claims 9 to 17, **characterized in that** the vessel (2) has a floor (28) which is inclined downwards towards the outlet (10) and the inclination of which is less than 30 degrees.

## Revendications

1. Procédé pour réduire le nombre de germes dans un produit en vrac en particules lâches, en particulier dans des épices ou des aromates ainsi que dans d'autres produits alimentaires en particules, dans lequel le produit est placé par lots dans un récipient sous pression suspendu de manière à pouvoir se déplacer et relié à un oscillateur, le récipient sous pression étant mis en oscillation avec le produit en vrac qui y a été placé, le produit en vrac recevant de la vapeur d'eau chauffée et le produit en vrac étant ensuite enlevé du récipient sous pression, **caractérisé en ce que** la totalité du volume intérieur du récipient sous pression (2) est remplie de produit en vrac lâche à traiter jusqu'à proximité de son extrémité supérieure avant d'injecter la vapeur d'eau et **en ce que** le récipient sous pression (2) suspendu à des ressorts à lame (4) est mis en oscillation horizontale en même temps que le produit en vrac lâche (50).

2. Procédé selon la revendication 1, **caractérisé en ce que** l'amplitude des oscillations est supérieure à 10 mm et de préférence supérieure à 20 mm.

3. Procédé selon les revendications 1 ou 2,
**caractérisé en ce que** le récipient (2) est mis en oscillation pendant son remplissage.

4. Procédé selon l'une des revendications 1 à 3,
**caractérisé en ce que** le récipient (2) est fermé hermétiquement après avoir été rempli d'un lot de produit en vrac (50).

5. Procédé selon l'une des revendications 1 à 4,
**caractérisé en ce qu'**avant d'injecter de la vapeur d'eau, une dépression est appliquée sur le récipient (2) et **en ce que** le récipient (2) est mis en oscillation pendant l'application de la dépression.

6. Procédé selon l'une des revendications 1 à 5,
**caractérisé en ce que** le récipient (2) est vidé après qu'on y a injecté de la vapeur d'eau et est mis en oscillation pendant qu'il est vidé.

7. Procédé selon l'une des revendications 1 à 6,
**caractérisé en ce que** le récipient (2) est mis en oscillation pendant toute la durée d'un cycle de réduction des germes.

8. Procédé selon l'une des revendications 1 à 7,
**caractérisé en ce que** le temps de séjour du produit en vrac dans le récipient (2) est contrôlé en fonction de la température qui règne à l'intérieur du récipient ou en fonction de la température du produit en vrac.

9. Dispositif de réduction du nombre des germes dans un produit en particules lâches en vrac, en particulier dans des épices ou des aromates ainsi que dans d'autres produits alimentaires en forme de particules, qui comprend un récipient sous pression suspendu de manière à pouvoir se déplacer et doté d'une entrée et d'une sortie de produit en vrac, une source de vapeur d'eau chauffée qui peut être reliée à l'intérieur du récipient sous pression et un oscillateur relié au récipient sous pression pour déplacer le produit en vrac pendant l'injection de vapeur d'eau, **caractérisé en ce que** la totalité du volume intérieur du récipient sous pression (2) peut être remplie par le produit en vrac lâche jusqu'à proximité de son extrémité supérieure et **en ce que** le récipient sous pression (2) est suspendu à des ressorts à lame (4) verticaux et peut être mis en oscillation horizontale par l'oscillateur.

10. Dispositif selon la revendication 9, **caractérisé en ce que** le récipient (2) est suspendu de manière à pouvoir se déplacer en va-et-vient. -

11. Dispositif selon les revendications 9 ou 10,
**caractérisé en ce que** le récipient (2) est suspendu de manière à pouvoir se déplacer dans un plan essentiellement horizontal.

12. Dispositif selon l'une des revendications 9 à 11,
**caractérisé en ce que** les oscillations du récipient (2) ont une amplitude de plus de 10 mm et de préférence de plus de 20 mm.

13. Dispositif selon l'une des revendications 9 à 12,
**caractérisé en ce que** l'oscillateur comprend un entraînement excentrique et un organe de transfert (24) disposé entre l'entraînement excentrique et le récipient (2) et qui transmet le déplacement de l'entraînement excentrique au récipient (2).

14. Dispositif selon l'une des revendications 9 à 13,
**caractérisé par** une source de dépression qui peut être reliée à l'intérieur du récipient et des dispositifs (46) qui relient la source de dépression à l'intérieur du récipient.

15. Dispositif selon la revendication 14, **caractérisé par** un filtre à particules (34) disposé entre la source de dépression et l'intérieur du récipient.

16. Dispositif selon la revendication 15, **caractérisé en ce que** le filtre à particules est disposé dans un évasement (32) du récipient (2) ouvert vers le bas.

17. Dispositif selon l'une des revendications 9 à 16,
**caractérisé en ce que** des pièces de raccordement souples (62, 64) sont disposées entre l'entrée (8) et un dispositif de remplissage disposé au-dessus de celle-ci et/ou entre la sortie (10) et un dispositif de séchage disposé en dessous de celle-ci.

18. Dispositif selon l'une des revendications 9 à 17,
**caractérisé en ce que** le récipient (2) présente un fond (28) incliné vers le bas en direction de la sortie (10) et dont la pente est de moins de 30 degrés.
